# DEMANDE DE BREVET EUROPEEN

(11) **EP 1 614 882 A2**
(43) Date de publication de la demande: **11.01.2006**
(21) Numéro de dépôt: 05300556.7
(22) Date de dépôt: 04.07.2005
(51) Int. Cl.: F02D 41/00, F02D 41/24

(54) **Dispositif et procédé de réglage d'un moteur suralimenté**

(30) Priorité: 05.07.2004 FR 0451436
(71) Demandeur: Renault s.a.s., 92100 Boulogne Billancourt (FR)
(72) Inventeur: Fontvieille, Laurent, 91190, GIF SUR YVETTE (FR); Lombardin, Jacques-Olivier, 91600, SAVIGNY SUR ORGE (FR)
(74) Mandataire: Rougemont, Bernard

(57) **Abrégé**

Pour l'asservissement d'un moteur, par exemple un moteur à explosion suralimenté par turbocompresseur, il est connu de calculer une valeur de consigne (C) à partir de paramètres de fonctionnement et de l'assigner à un organe de réglage (26). Pour accélérer la régulation, un réglage préalable est effectué selon des valeurs de calibration (T) mémorisées. Cependant, des différences entre moteurs et des déviations inhérentes à leur utilisation éloignent les valeurs de calibration mémorisées des consignes réelles calculées, ce qui diminue l'intérêt du réglage préalable.

L'invention propose un processus et un dispositif d'apprentissage destinés à corriger les valeurs de calibration, qui ne nécessitent pas de capteurs supplémentaires mais utilisent les dispositifs déjà présents dans l'unité de contrôle électronique du moteur. Des conditions d'apprentissage peuvent cependant être vérifiées.

## Description

### DOMAINE TECHNIQUE DE L'INVENTION

L'invention se rapporte au domaine du contrôle moteur, c'est-à-dire la technique de gestion d'un moteur à combustion avec l'ensemble de ses capteurs et actionneurs. Plus précisément, l'invention concerne un dispositif et un procédé destinés à améliorer la régulation d'un moteur, en particulier un moteur diesel suralimenté par turbocompresseur.

L'invention se rapporte au « préréglage » du moteur sur une valeur calibrée, c'est-à-dire au réglage préliminaire à l'asservissement par une commande déterminée par une unité de contrôle électronique, et à un apprentissage destiné à optimiser les valeurs de calibration.

### ÉTAT DE LA TECHNIQUE

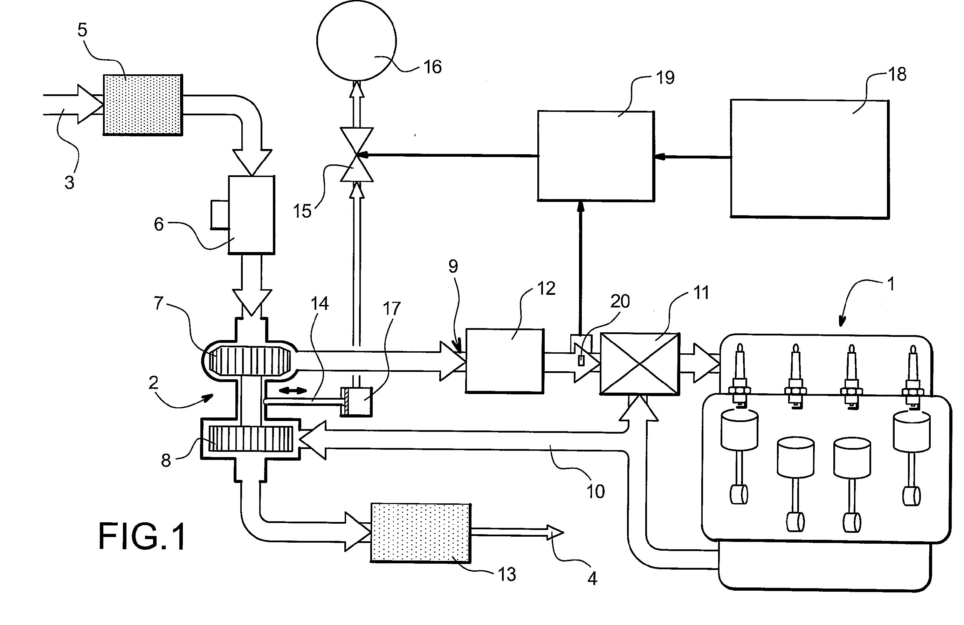

Un moteur à explosion 1 à turbocompresseur 2 est schématisé sur la figure 1. Le moteur 1 est alimenté en air frais par une entrée 3 et rejette les gaz brûlés par un échappement 4. L'air frais passe par un filtre 5 et un débitmètre 6 avant d'entrer dans le turbocompresseur 2, qui est composé d'un compresseur 7 et d'une turbine 8, dans le but d'augmenter la quantité d'air admise dans les cylindres du moteur 1. Le compresseur 7 comprime l'air qui entre dans le collecteur d'admission 9 ; il est monté sur le même axe que la turbine 8, qui est placée à la sortie du collecteur d'échappement 10 et est entraînée par les gaz d'échappement provenant de la vanne 11. Un échangeur 12 peut être placé au niveau du collecteur d'admission 9 pour refroidir l'air à la sortie du compresseur 7.

En raison de la sévérité accrue des normes de dépollution, il est classique également de trouver un filtre à particules 13 placé dans la ligne d'échappement 4 après le turbocompresseur 2, afin de réduire la quantité de particules rejetées dans l'environnement. Le filtre 13 est composé d'un ensemble de micro canaux dans lesquels une grande partie des particules se trouvent piégées ; une fois plein, le filtre est vidé lors d'une phase de régénération en brûlant les particules, soit par un dispositif de chauffe, soit par des réglages du moteur spécifiques.

Les moteurs suralimentés comprennent enfin un réglage du turbocompresseur 2 pour s'adapter aux différents régimes rencontrés : par exemple, aux faibles régimes, le débit de gaz d'échappement qui traverse la turbine 8 fournit trop peu d'énergie pour entraîner le turbocompresseur 2 et porter l'air traversant le compresseur 6 à la pression souhaitée. De même, la présence du filtre à particules 13 produit une augmentation de la contre pression d'échappement, d'autant plus importante que le filtre 13 est chargé en suies, qui se traduit vis-à-vis du turbocompresseur 2 par une réduction du taux de détente, et donc une réduction de la puissance fournie par les gaz d'échappement à la turbine 8 et une diminution des performances du moteur 1.

La puissance fournie par les gaz d'échappement à la turbine 8 peut être modulée en y installant un organe de réglage, par exemple une soupape de décharge ; un dispositif classique de réglage continu du turbocompresseur 2, en particulier pour les turbocompresseurs à géométrie variable, comprend des ailettes pivotantes situées à l'entrée de la turbine 8 de façon à modifier la section d'ouverture offerte aux gaz d'échappement vers la turbine 8, le rapport de détente des gaz et finalement l'énergie gagnée pour comprimer l'air aspiré.

Le rapport de détente, corrélé à un état de plus ou moins grande ouverture des ailettes, peut être modifié, si possible à chaque instant, d'après les conditions de fonctionnement et de commande du moteur. Un actionneur est utilisé pour piloter l'ouverture et la fermeture de l'organe de réglage. Par exemple, une tige de commande 14 assure le pivotement des ailettes ; un signal de commande est délivré à un dispositif d'actionnement pouvant consister en une électrovanne 15 située entre une pompe à vide 16 et un piston 17 relié à la tige 14 : en ouvrant l'électrovanne 15, la dépression de commande s'accroît, le piston 17 est aspiré et la tige 14 déplacée.

Classiquement, le signal de commande de l'actionneur est fourni par une unité de contrôle électronique 18 qui calcule une valeur de consigne, et permet ainsi d'asservir la pression dans le collecteur d'admission 9 par l'intermédiaire d'un régulateur 19. Le signal de commande est calculé principalement à partir d'un signal mesurant la pression dans le collecteur d'admission 9 de l'air dans le moteur 1, entre le compresseur 7 et la culasse du moteur, par exemple via un capteur de pression 20 : le capteur de pression 20 placé sur le collecteur d'admission 9 fournit la pression mesurée au régulateur 19, qui reçoit une commande de consigne de l'unité de calcul 18 et fournit un signal de commande à l'électrovanne 15.

La régulation continue de la pression de l'air au collecteur 8 implique de disposer d'une pression de consigne P_{cons} en fonction du régime et de ramener sans cesse la pression mesurée Pₘₒₜ au collecteur 9 à la pression de consigne. Différents moyens de calcul et d'asservissement ont été mis au point pour assurer ces fonctions ; le régulateur le plus couramment utilisé est de type PID (Proportionnelle, Intégrale, Dérivée).

Avec l'augmentation des performances des moteurs diesel suralimentés, les niveaux de pressions de suralimentation augmentent aussi et les turbocompresseurs sont de plus en plus sollicités. Il est donc important de les piloter le plus finement possible pour éviter la détérioration du turbocompresseur et pour améliorer par exemple la réactivité du véhicule lors des accélérations.

Pour améliorer le temps de réponse de la boucle de régulation, une valeur de positionnement préalable de la soupape ou des ailettes peut être entrée dans le régulateur : en fonction des paramètres déterminés, l'organe de réglage est positionné sur cette valeur calibrée, puis est asservi en fonction de la valeur de consigne de la commande calculée par l'unité de contrôle.

Classiquement, la valeur de positionnement préalable se présente sous la forme d'une cartographie stockant des valeurs du signal de commande de l'organe de réglage calibrées en fonction de paramètres du moteur, par exemple le régime moteur et le débit carburant. Lors de la mise au point du moteur, des valeurs de positionnement préalable sont stockées dans le module à partir d'essais faits sur un moteur nominal ; une fois cette calibration effectuée, les paramètres de fonctionnement du moteur vont déterminer le positionnement préalable de l'organe de réglage sur la valeur correspondante stockée du signal de commande de la soupape ou des ailettes.

Certes, actuellement, le positionnement préalable, souvent cartographié en régime moteur et débit carburant, est corrigé en fonction de paramètres externes tels que la pression atmosphérique ou la température de l'air. Cependant, on observe que des différences inévitables entre les véhicules, en fonction de dispersions de caractéristiques de leurs éléments matériels consécutives à la fabrication, l'assemblage et l'usure par exemple, conduisent à des réglages différents du turbocompresseur pour un même état de fonctionnement des moteurs. Le positionnement préalable devient alors inadapté vis-à-vis de la consigne de suralimentation (car éloigné), et le régulateur devra rattraper les écarts entre signaux de commande préalable et de consigne : quel que soit le type de régulateur utilisé, l'asservissement n'est pas instantané et son temps de réponse dépend des dispersions et des dérives. De plus, pour un point de fonctionnement connu, la correction appliquée par le régulateur pour annuler l'écart de pression doit être systématiquement recalculée par l'unité de contrôle.

Dans le document FR-A-2 831 921, un deuxième intégrateur propose de compenser certaines dispersions et dérives par la mémorisation d'une correction calculée pour un régime moteur particulier. Cependant, cette correction unique est appliquée à tout le positionnement préalable, et risque d'introduire un écart supplémentaire sur les autres valeurs de calibration mémorisées par rapport à la consigne effective.

### EXPOSÉ DE L'INVENTION

L'invention se propose de mesurer et de mémoriser la correction des valeurs de positionnement préalable du régulateur de suralimentation sur tout le domaine d'excursion du moteur.

Selon l'invention sous l'un de ses aspects, un dispositif de régulation de pression comprenant un ou plusieurs modules de stockage de valeurs calibrées de positionnement préalable et de pression théorique d'air arrivant dans le moteur en fonction de paramètres de fonctionnement du moteur est proposé dans lequel, outre les moyens pour déterminer les paramètres de fonctionnement du moteur, les moyens pour appliquer le positionnement préalable correspondant à un organe de réglage du moteur et les moyens pour détecter la pression d'air parvenant au moteur, sont présents des moyens de calcul d'une intégrale de la différence entre la pression théorique et la pression mesurée par le détecteur. La valeur de cette intégrale est alors utilisée par des moyens pour corriger la valeur du positionnement préalable calibré et pour mémoriser cette correction. Ainsi, pour chaque point de fonctionnement du moteur, au fur et à mesure de l'utilisation du moteur et des dérives en résultant, il est possible de corriger le calibrage du positionnement préalable et de positionner l'organe de réglage au plus près des valeurs de consigne réelles.

Ce dispositif peut être utilisé pour un moteur comprenant un turbocompresseur, dont l'organe de réglage comprend par exemple des ailettes ou une soupape, et dont les paramètres de fonctionnement déterminés peuvent être le régime du moteur et le débit en carburant.

Avantageusement, des moyens pour corriger le calibrage en fonction de paramètres externes, tels que la pression atmosphérique, la température de l'air ou la concentration en particules affinent également le positionnement préalable.

Le dispositif peut comporter des moyens pour déterminer les conditions d'apprentissage de la correction, par exemple pour évaluer la stabilité dans le temps des paramètres de fonctionnement du moteur, afin de valider ou non la modification des valeurs stockées dans les moyens de correction.

Le dispositif selon l'invention présente de préférence des moyens pour calculer une commande de consigne en fonction des paramètres détectés, et des moyens pour appliquer cette valeur de consigne à l'organe de réglage afin d'affiner le réglage par rapport au positionnement préalable. Avantageusement, ces moyens pour calculer la commande de consigne comportent des moyens pour calculer l'intégrale de la différence entre la pression théorique et la pression mesurée qui sont identiques à ceux utilisés pour la correction de la calibration, ce qui permet d'alléger le dispositif.

Sous un autre aspect, l'invention concerne un procédé de régulation d'un moteur suralimenté dans lequel un positionnement de l'organe de réglage préalable à tout calcul est prévu, et dans lequel le positionnement préalable est effectué par l'intermédiaire de valeurs calibrées stockées dans un module en fonction de paramètres de fonctionnement du moteur, caractérisé par le fait que les valeurs calibrées sont corrigées par une boucle de régulation et les modifications des corrections mémorisées au cours des réglages du moteur. A cet effet, le procédé prévoit le calcul d'une intégrale de la différence entre la valeur théorique en fonction des paramètres de fonctionnement du moteur et la valeur mesurée de la pression, et son addition à la valeur calibrée de positionnement préalable. De préférence, le calcul d'intégrale sert également pour calculer une valeur de consigne de la commande à appliquer à l'organe de réglage par un traitement numérique des différents paramètres. A cet égard, la valeur de consigne est ensuite appliquée à l'organe de réglage.

Il est préférable que des conditions d'apprentissage soient déterminées avant de mémoriser la modification de la correction de la calibration.

### BRÈVE DESCRIPTION DES DESSINS

Les figures annexées permettront de mieux comprendre l'invention, mais ne sont données qu'à titre indicatif et ne sont nullement restrictives.
La figure 1, déjà décrite, montre schématiquement le fonctionnement d'un moteur à turbocompresseur avec régulateur.
La figure 2 présente schématiquement un processus de réglage d'un moteur diesel à turbocompresseur suralimenté.
La figure 3 montre graphiquement l'influence du positionnement préalable pour atteindre la consigne.
La figure 4 représente schématiquement le réglage d'un moteur avec apprentissage selon l'un des modes de réalisation de l'invention.

### EXPOSÉ DÉTAILLÉ DE MODES DE RÉALISATION PARTICULIERS

L'invention sera décrite plus particulièrement pour un moteur diesel avec turbocompresseur suralimenté. Il doit cependant être compris que cet exemple n'est pas limitatif.

Tel que précisé plus haut, au cours du fonctionnement du moteur et notamment lors des changements de régime, la pression d'air Pₘₒₜ parvenant au moteur est contrôlée par le capteur 20 et des ajustements sur différents éléments du moteur essaient de la modifier afin d'assurer un rendement optimal du moteur. A cette fin, un organe de réglage est asservi par un régulateur.

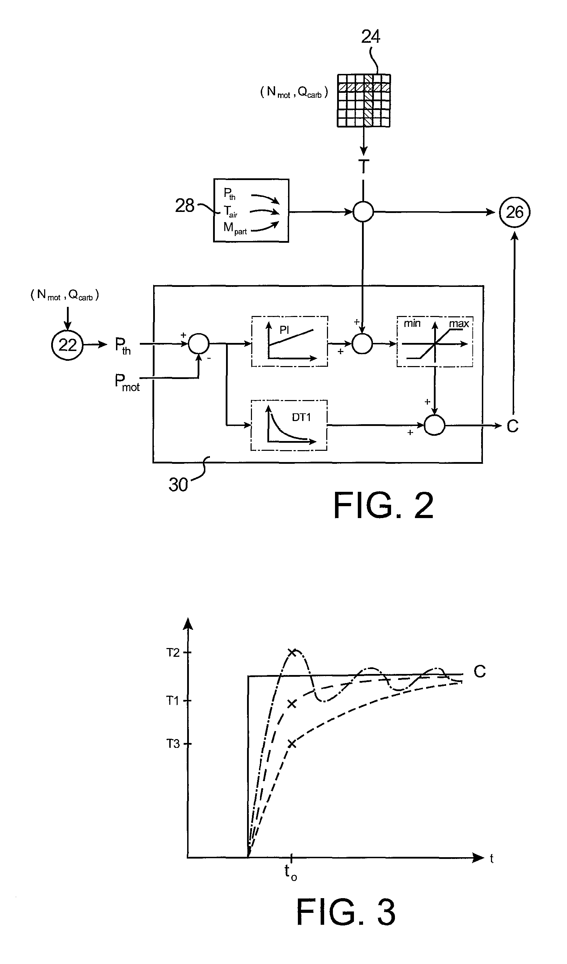

Tel que schématisé sur la figure 2, des moyens appropriés déterminent des paramètres du moteur, en l'occurrence le régime du moteur, habituellement sous la forme du nombre de tours N_{Tot}, et le débit en carburant Q_{carb}, même si ces exemples ne sont pas limitatifs.

Un premier module de stockage 22 permet de déterminer la valeur de la pression théorique Pₜₕ qui devrait parvenir au moteur pour un fonctionnement optimal, en fonction des conditions données par les paramètres déterminés. Un deuxième module 24 permet de déterminer la position préalable de l'organe de réglage qui lui correspond pour parvenir à ce résultat ; ce module de stockage 24 a été initialisé, avant mise en place du moteur, par des valeurs de positionnement théoriques T déterminées par exemple en usine ou sur banc d'essai. Ce positionnement théorique T permet de « prérégler » l'organe de réglage 26 dans le but d'obtenir au niveau du capteur 20 une mesure de la pression P_{moL} similaire à la valeur théorique Pₜₕ. Cette pression de suralimentation du moteur est mesurée par un capteur 20, généralement piézo-électrique qui traduit une tension numérisée en Pascal via une table de correspondance pour donner la valeur P_{IOL}.

Il est possible, tel que schématisé, de stocker dans un module 28 des valeurs de correction du positionnement préalable en fonction de paramètres externes à la conduite : la pression atmosphérique Pₐₜₘ ou la température de l'air Tₐᵢᵣ entrant dans le compresseur peuvent par exemple modifier le positionnement préalable de l'organe de réglage pour diminuer la pression de suralimentation et limiter le régime du turbocompresseur en fonction de l'altitude et de la température ambiante, ce qui assure une protection contre les survitesses et le pompage du turbocompresseur ; la masse de particules Mₚₐᵣₜ dans le filtre 13 permet de maintenir un taux de détente aux bornes de la turbine malgré l'augmentation de la contre pression échappement.

La valeur calibrée T, éventuellement corrigée comme ci-dessus, est cependant rarement le positionnement préalable optimal de rendement du moteur : tel que précisé plus haut, les conditions de conduite, l'usure du moteur,... écartent le régime de fonctionnement du moteur réel des valeurs théoriques et calibrées pour un type de moteur neuf et en usine.

Tel que schématisé sur la figure 2, l'unité de calcul 30 détermine alors la commande de consigne réelle C à appliquer à l'organe de réglage 26 du turbocompresseur 2 pour que la pression mesurée Pₘₒₜ soit la plus proche possible d'un fonctionnement optimal du moteur. Habituellement, il s'agit d'une régulation de type « Proportionnelle, Intégrale, Dérivée », qui calcule en particulier l'intégrale de la différence entre la pression mesurée Pₘₒₜ et la pression théorique Pₜₕ. Le signal de commande de consigne C ainsi calculé peut ensuite être appliqué à l'organe de réglage 26.

En raison des dérives et dispersions, le positionnement préalable sur la valeur théorique T peut cependant s'éloigner fortement de la valeur de consigne C. La figure 3 présente différents écarts et leurs effets : si on note une réponse optimale pour la première courbe dont le signal de positionnement préalable T1 était très proche de la valeur de consigne C, avec un bon suivi en stabilisé et un bon suivi en régime transitoire, les résultats sont différents dans les autres cas. Ainsi, la réponse de la régulation de suralimentation avec un positionnement préalable T2 trop élevé est beaucoup plus longue pour ramener la commande sur la valeur de consigne avec un risque d'oscillations. Or ceci entraîne des dépassements de pression au niveau du moteur qui peuvent détériorer le turbocompresseur et le circuit de suralimentation ; les oscillations négatives risquent quant à elles de générer des variations du couple moteur, pouvant perturber la conduite du véhicule. En ce qui concerne le positionnement préalable T3 trop faible, il n'est pas capable d'amener la commande sur sa consigne sans le régulateur, ce qui a pour effet de dégrader le temps de réponse et donc les performances du véhicule.

Outre les inconvénients susmentionnés concernant le mauvais positionnement préalable, il faut noter que des dérives du moteur sont rarement ponctuelles. De fait, une altération du moteur entraînant un nouveau positionnement pour un rendement optimal est souvent continue, voire progressive, et donc un écart mesuré à certaines conditions (Nₘₒₜ ; Q_{carb}) devra être compensé chaque fois que le moteur entre dans le même régime (Nₘₒₜ ; Q_{carb}). Par souci d'efficacité, il semble souhaitable de stocker pour chaque point de fonctionnement (Nₘₒₜ; Q_{carb}) dans une table la correction consécutive à la dérive et apportée à la régulation de suralimentation : celle-ci pourra ainsi être ensuite instantanément appliquée.

L'invention propose un module de correction intégrant de façon itérative les modifications sur le positionnement préalable et prenant en compte les dérives des composants qui participent à la régulation de suralimentation (source de dépression, électrovanne, poumon pneumatique de commande du turbocompresseur, etc.), et les dispersions de chaque élément du moteur qui ont un impact sur la régulation de suralimentation.

Ainsi, lors de la détermination de la valeur du signal de commande de consigne C, et tel que schématisé sur la figure 2, un traitement numérique est appliqué par le module 30 aux pressions mesurée Pₘₒₜ et théorique Pₜₕ, qui comprend entre autres une étape de détermination de l'intégrale de la différence entre ces deux valeurs (incluse dans le traitement PI) ; cette intégrale I_{reg} correspond de fait à une correction de la suralimentation.

Il est donc proposé de faire la somme de la partie intégrale du régulateur de suralimentation avec l'ancienne valeur de calibration mémorisée dans le module 24, directement ou indirectement par l'intermédiaire d'un module de stockage de corrections 32. Il est possible éventuellement de mémoriser la valeur de cette nouvelle correction dans le module de stockage de corrections 32. Ainsi, lors du fonctionnement ultérieur du moteur aux mêmes conditions prédéfinies (Nₘₒₜ;Q_{carb}), la valeur de calibration T servant au positionnement préalable pourra être corrigée des dérives qui étaient survenues auparavant avant même d'être appliquée à l'organe de réglage 26.

L'invention ne nécessite pas de capteur supplémentaire, puisque la sortie de l'intégrale du régulateur 30 de suralimentation utilisait déjà la mesure de la pression de suralimentation Pₘₒₜ et que donc le capteur 20 était présent.

Il est à noter que les phases de corrections sont ponctuelles, ce qui permet d'utiliser le régulateur de façon analogue à l'utilisation classique, dont un exemple est donné dans la description ci-dessus de la figure 2.

Afin d'éviter toute modification consécutive à un dysfonctionnement temporaire du moteur (par exemple l'encrassement du filtre à particules), il est souhaitable de s'assurer auparavant que des conditions propices à un apprentissage sont réunies. En particulier sont prévus des moyens qui permettent de vérifier que le moteur est dans un état stable et/ou que les conditions extérieures ne sont pas exceptionnelles. De même, il est préférable d'attendre un certain délai avant d'évaluer la nouvelle correction et de la mémoriser.

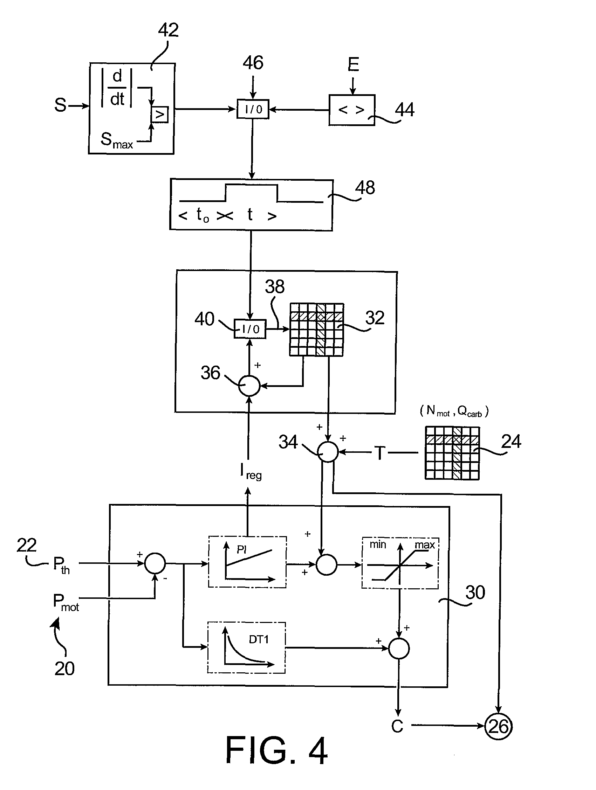

La figure 4 reprend schématiquement les différentes étapes. La détermination du positionnement préalable T, de la pression théorique Pₜₕ, le positionnement préalable calibré de l'organe de réglage 26, le calcul de la commande C sont similaires à la figure 2 et ne seront pas décrits plus avant. Des moyens 32 sont prévus pour corriger la valeur T donnée par le module de stockage 24 : la valeur de correction correspondant aux paramètres de fonctionnement déterminée est ajoutée au positionnement préalable théorique T par l'intermédiaire de l'élément 34.

Les moyens de correction 32, ou module de correction, sont de plus pourvus de moyens 36, 38 qui permettent d'ajouter à la valeur de correction initiale l'intégrale de la différence I_{reg} ; les moyens de correction 32 sont par ailleurs adaptés pour mémoriser la modification de la valeur de correction à appliquer. Si, dans cet exemple, la correction I_{reg} est toujours mesurée (car faisant partie du traitement numérique pour déterminer la valeur de commande C) et la nouvelle valeur de calibration est toujours calculée par l'élément 36, des moyens 40 sont prévus pour autoriser la mémorisation 38 de la nouvelle valeur de correction dans le module 32. Cette configuration n'est qu'un exemple : il est possible que le calcul de la nouvelle valeur de correction soit effectué uniquement lorsque celle-ci est effectivement mémorisée.

Les corrections montrées sur la figure 2 et apportées au positionnement théorique T en fonction des paramètres par le module 28 ne sont pas reprises mais peuvent être également présentes, voire intégrées dans le module 32.

Dans le cas représenté, trois modules de vérification des conditions d'apprentissage permettent l'écriture des modifications de corrections dans le module 32. Le module 42 permet ainsi de vérifier les conditions de stabilité : pour un certain nombre de paramètres S, la variation de chaque paramètre est mesurée, en particulier par le calcul de sa dérivée par rapport au temps, et comparée à un seuil : la condition de stabilité est remplie lorsque la valeur absolue de la variation **|**ds/dt **|** est inférieure à ce seuil Sₘₐₓ. Les paramètres S concernés peuvent être l'un ou plusieurs parmi le régime moteur N_{moL}, le débit carburant Q_{carb}, la consigne de la pression de suralimentation P_{cons}, la pression de suralimentation P_{moL}, la mesure du débit d'air frais Qₐᵢᵣ par le débitmètre 6, l'intégrale du régulateur de suralimentation I_{reg} (c'est-à-dire de fait la valeur de la correction) ...

Le module 44 évite d'effectuer des corrections lorsque les conditions de fonctionnement du moteur sont exceptionnelles ou anormales : les paramètres E sont comparés à des seuils E_{exc} afin d'éviter les écarts extrêmes et corrections ponctuelles inadaptées à un apprentissage. Ces paramètres peuvent concerner la température de l'eau du moteur Tₑₐᵤ, la pression atmosphérique Pₐₜₘ, la température extérieure, la tension de la batterie V_{bat}.

Il est souhaitable qu'un module 46 vérifie que ces deux types de condition pour les paramètres S et E soient remplis. Certaines conditions pourraient cependant être ignorées en cas de fonctionnement particulier du moteur dans des situations non prévues par le constructeur, et si nécessaire. Il est clair que la liste des conditions d'apprentissage n'est pas exhaustive, et peut varier en fonction des grandeurs disponibles sur le moteur, de la zone d'activation de l'apprentissage (exemple d'apprentissage avec ou sans recirculation des gaz d'échappement, dont une partie peut être réinjectée à l'admission dans certaines phases de fonctionnement du moteur pour réduire les émissions d'oxyde d'azote), ou de la prise en compte des conditions environnementales.

Enfin, un module 48 permet de vérifier que les conditions d'apprentissage déterminées par les modules 42 et 44 sont constantes au cours de l'apprentissage, c'est-à-dire durant le calcul de la modification de la correction, et ce après un certain délai de temporisation : la condition d'apprentissage finale est remplie lorsque chaque entrée est égale à I dans le module 40 après un temps d'attente t₀ et pendant le temps d'apprentissage t.

La phase d'apprentissage peut se résumer à l'organigramme suivant :
1) Vérification que les conditions d'apprentissage 42, 44, 48 sont remplies (valeur I dans les éléments 46 et 40) ;
2) Recherche du point d'apprentissage en régime moteur Nₘₒₜ et en débit carburant Q_{carb} dans le module 32 ;
3) Calcul de l'intégrale I_{reg} (au sein du calcul de PI pour la valeur de consigne C par l'élément 30) ;
4) Addition de la partie intégrale I_{reg} à la valeur de correction par l'élément 36 ;
5) Mémorisation de la nouvelle valeur de correction de la calibration au point (Nₘₒₗ ; Q_{carb}) dans le module 32 ;
6) Attente d'un nouvel apprentissage.

Par ailleurs, pour éviter toute variation brutale sur la commande du turbocompresseur 2 lors d'un apprentissage, différentes possibilités sont offertes au cours de l'étape 6) d'attente d'un nouvel apprentissage. Par exemple, il est possible, après l'apprentissage, d'initialiser à zéro la partie intégrale I_{reg} ou PI du régulateur d'équilibrage 30. Une autre alternative concerne la possibilité de restreindre, ou empêcher, l'écriture 38 dans la cartographie d'apprentissage 32 de l'équilibrage pendant un certain délai lorsque le point de fonctionnement (Nₘₒₜ ; Q_{carb}) sur lequel l'apprentissage a eu lieu vient d'être quitté.

L'un des avantages d'une telle stratégie d'apprentissage est de mémoriser la correction apportée par le régulateur en régime stabilisé pour tous les points de fonctionnement du moteur et de l'appliquer instantanément en s'affranchissant du temps de réponse de l'asservissement.

Un autre avantage de l'apprentissage concerne la réduction de la sensibilité de régulation de suralimentation vis-à-vis des dérives sur un véhicule lié au vieillissement et aux dispersions entre véhicules.

## Revendications

1. Dispositif de régulation de pression d'un moteur (1) muni d'un organe de réglage (26), comprenant :
- des moyens pour déterminer des paramètres de fonctionnement du moteur (Nₘₒₜ;Q_{carb}) ;
- des moyens (22, 24) pour stocker des pressions théoriques (Pₜₕ) et des valeurs calibrées de positionnement préalable (T) en fonction des paramètres de fonctionnement du moteur ;
- des moyens (14) pour appliquer un réglage préalable à l'organe de réglage (26) en fonction de la valeur calibrée stockée (T) pour les paramètres de fonctionnement du moteur déterminés ;
- des moyens (20) pour mesurer une pression d'air (Pₘₒₜ) parvenant au moteur ;
- des moyens de calcul (30) d'une intégrale (I_{reg}) de la différence entre la pression théorique (Pₜₕ) et la pression mesurée (Pₘₒₜ);
- des moyens (32) pour corriger la valeur de positionnement préalable calibré (T) en fonction des paramètres de fonctionnement du moteur ;
**caractérisé par** des moyens pour modifier (36) et pour mémoriser (38), dans les moyens pour corriger (32), la correction stockée pour les paramètres déterminés, en lui ajoutant l'intégrale calculée (I_{reg}).

2. Dispositif selon la revendication 1 comprenant des moyens de calcul d'une commande de consigne (C) et des moyens d'asservissement (19) de l'organe de réglage (26) en fonction de la commande de consigne.

3. Dispositif selon l'une des revendications 1 à 2 comprenant des moyens de détermination de conditions d'apprentissage (42, 44, 48) et des moyens (40) pour activer les moyens (38) pour mémoriser en fonction des conditions d'apprentissage déterminées.

4. Dispositif selon la revendication 3 dans lequel les moyens pour déterminer les conditions d'apprentissage comprennent des moyens pour vérifier la stabilité des paramètres (42) et/ou des moyens (44) pour vérifier que le moteur fonctionne dans les conditions prévues.

5. Dispositif selon l'une des revendications 1 à 4 comprenant des moyens (28) pour corriger le positionnement préalable calibré (T) en fonction de la pression atmosphérique, de la température de l'air, et/ou de la masse de particules dans un filtre.

6. Dispositif selon l'une des revendications 1 à 5 dans lequel le moteur (1) comprend un turbocompresseur (2), l'organe de réglage (26) comprend des ailettes ou une soupape, les paramètres de fonctionnement du moteur sont le régime du moteur (Nₘₒₜ) et le débit de carburant (Q_{carb}).

7. Procédé de régulation d'un moteur (1) suralimenté comprenant un organe de réglage (26), des moyens de stockage de pressions théoriques (22), de valeurs de positionnement préalable calibré (24) et de valeurs de correction du positionnement préalable (32) en fonction des paramètres de fonctionnement du moteur, et des moyens pour donner une consigne (19) à l'organe de réglage (26), le procédé comprenant :
- la détermination des paramètres de fonctionnement du moteur (Nₘₒₜ ; Q_{carb}) ;
- le positionnement préalable de l'organe de réglage (26) grâce à la valeur calibrée (T) et sa correction qui sont stockées et correspondent aux paramètres de fonctionnement déterminés ;
- la mesure d'une pression d'air (Pₘₒₜ) parvenant au moteur ;
- le calcul d'une intégrale (I_{reg}) de la différence entre la pression d'air mesurée (Pₘₒₜ) et la pression théorique (Pₜₕ);
- la modification (34) de la correction dans le module de correction (32) par l'intégrale calculée.

8. Procédé selon la revendication 7 comprenant le traitement numérique de la différence entre la pression d'air mesurée (Pₘₒₜ) et la pression théorique (Pₜₕ) pour déterminer une commande de consigne (C), ce traitement numérique englobant le calcul de l'intégrale (I_{reg}).

9. Procédé selon la revendication 8 comprenant le positionnement de l'organe de réglage (26) sur la valeur de consigne (C).

10. Procédé selon l'une des revendications 7 à 9 comprenant la détermination de conditions d'apprentissage préalablement à la modification de la correction.
